# EUROPÄISCHE PATENTSCHRIFT

(11) **EP 3 237 773 B1**
(45) Veröffentlichungstag und Bekanntmachung des Hinweises auf die Patenterteilung: **04.09.2019**
(21) Anmeldenummer: 15787529.5
(22) Anmeldetag: 23.10.2015
(51) Int. Cl.: F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 30.10.2014 DE 102014115762
(43) Veröffentlichungstag der Anmeldung: 01.11.2017
(73) Patentinhaber: KNORR-BREMSE Systeme für Nutzfahrzeuge GmbH, 80809 München (DE)
(72) Erfinder: ADAMCZYK, Philipp, 87677 Stöttwang (DE); SCHEUFLER, Christian, 80807 München (DE); KLINGNER, Matthias, 82272 Moorenweis (DE)
(86) Internationale Anmeldenummer: PCT/EP2015/074670
(87) Internationale Veröffentlichungsnummer: WO 2016/066561

(56) Entgegenhaltungen:
- EP-A1- 2 385 268
- DE-A1- 4 212 384
- DE-A1-102012 006 112
- DE-U1- 29 510 331

## Beschreibung

Die Erfindung betrifft eine Scheibenbremse für ein Nutzfahrzeug nach dem Oberbegriff des Anspruchs 1.

Die Zuspanneinrichtung einer solchen Scheibenbremse ist pneumatisch oder elektromechanisch betätigbar, wobei hierzu die Zuspanneinrichtung einen verschwenkbaren Bremshebel aufweist, der im Abstützbereich als Exzenter ausgebildet ist und sich einerseits an einer Wand des Bremssattels und andererseits an einer verschiebbaren Brücke abstützt, wozu im letzteren Fall eine Wälzrolle zwischen dem Bremshebel und der Brücke positioniert ist.

Zur Lagerung der Wälzrolle ist im Bremshebel eine im Querschnitt kreisbogenförmig gestaltete Lagerschale angeordnet, die in einer rinnenförmigen Aufnahme des Bremshebels, beispielsweise durch Vernieten gehalten ist.

Diese Lagerschale ist als sogenannte DU-Lagerung ausgebildet, mit einem Träger, beispielsweise aus Stahl einer Zwischenschicht aus Sinter-Material und einer Kunststoffbeschichtung, um eine ausreichende Gleitfähigkeit zu erhalten, die aus der konstruktionsbedingten Historie allerdings mit einem Anteil Blei versehen ist.

Dies wird unter Umweltaspekten als problematisch angesehen, so dass Forderungen dahingehen, die Lagerschale in einer, bezogen auf die Materialauswahl, unproblematischen Konfiguration bereitzustellen.

Unabhängig davon kommt es bei der bekannten Lagerschale mit zunehmender Betriebsdauer aufgrund der Vielzahl der Schwenkbewegungen des Bremshebels zu Auswalkungen des Trägermaterials der DU-Lagerung, so dass eine angestrebte optimierte Standzeit nicht erreicht wird.

In der Konsequenz bedeutet dies einen relativ hohen Reparaturaufwand, um die Betriebssicherheit der Scheibenbremse dauerhaft zu gewährleisten, mit den sich daraus ergebenden Kosten, die Kosten der Montage und Demontage, der Ersatzteilbeschaffung sowie der Stillstandszeiten des Fahrzeuges für die Reparaturdauer einschließen.

Diese Kosten ergeben sich mehr oder weniger unabhängig davon, wo die Gleitlagerung angeordnet ist. Die Lagerschale kann, wie erwähnt, im Bremshebel vorgesehen sein, wo sie dann in Korrespondenz mit einer Wälzrolle steht, die mit der Brücke verbunden ist, an der Brücke selbst, mit Ausbildung einer Wälzrolle oder eines vergleichbaren Wulstes am Bremshebel, sowie an der Innenseite einer Wandung des Bremssattels, bei der dann zur Komplettierung des Gleitlagers die Wälzrolle ebenfalls als Wulst an den Bremshebel angeformt oder angeordnet ist. In diesem Fall gestaltet sich der Austausch der Lagerschale aufgrund der erschwerten Zugänglichkeit besonders umständlich, d.h. aufwändig.

In der EP 2 385 268 A1 ist eine Scheibenbremse entsprechend der Gattung offenbart, bei der die Lagerschale in einer Aufnahme des Bremshebels durch einseitige Klemmung mittels Käfigrückführungen am Bremshebel gehalten ist, wobei die Käfigrückführungen mit dem Bremshebel vernietet sind.

Der Erfindung liegt die Aufgabe zugrunde, eine Scheibenbremse der gattungsgemäßen Art so weiterzuentwickeln, dass ihre Standzeit, insbesondere die der Zuspanneinrichtung mit konstruktiv und fertigungstechnisch geringem Aufwand wesentlich verlängert wird.

Diese Aufgabe wird durch eine Scheibenbremse mit den Merkmalen des Anspruches 1 gelöst.

Durch diese erfindungsgemäße Ausgestaltung der Anordnung der Lagerschale in der Aufnahme ist die Lagerschale in Schwenkrichtung des Bremshebels praktisch eingespannt, so dass sie, im Gegensatz zum Stand der Technik, nicht über das ursprüngliche Maß hinaus wandern kann. Das beschriebene Walken, wie es bisher zu beobachten ist, wird damit wirksam verhindert.

Dabei kann die Art der Anschlagkanten, also deren Formgebung, verschieden sein. Entscheidend ist, dass eine Verformung der Lagerschale durch die Korrespondenz mit der Wälzrolle praktisch ausgeschlossen ist.

Neben diesen funktionalen Vorteilen, die zu einer deutlich verlängerten Standzeit führen, aus der sich eine durchaus bemerkenswerte Kostenersparnis ergibt, ist auch die Modifikation der neuen Lagerschale gegenüber einer bekannten deutlich verbessert. Dies vor allem dadurch, dass DU-Gleitlager Verwendung finden können, deren Gleitschicht praktisch ohne Gleitzusatz auskommt.

Auch die Herstellung der Lagerschale und nicht zuletzt deren Befestigung in der Aufnahme gestalten sich deutlich vereinfacht, da nunmehr keine Verdrehsicherung vorgesehen sein muss.

Da die Lagerschale ihre ursprüngliche Form dauerhaft behält, auch nach einer Betriebsdauer, die weit über der bisherigen liegt, ist stets eine exakte Führung der Wälzrolle gegeben.

Wie sich überraschend gezeigt hat, führt die erfindungsgemäße Ausgestaltung des Gleitlagers zu einer wesentlichen Erhöhung der relevanten Lastspielzahlen, wobei sehr hohe Lastaufnahmen mit relativ günstigen Gleitlagermaterialien erreicht werden.

Die Anschlagkanten werden bevorzugt spangebend in die beiden sich gegenüberliegenden, längsseitigen Randbereiche der Aufnahme eingebracht und können in ihrer Ausbildung unterschiedlich sein. Statt einer spangebenden Ausbildung können die Anschlagkanten auch in einem Urformverfahren dargestellt werden.

Die Querschnittsform der Anschlagkanten kann im Sinne einer Ausklinkung vorliegen, eventuell mit kleinen Ausformschrägen, wobei dann die Lagerschale mit daran angepassten randseitigen Abwinkelungen anliegt.

Denkbar ist auch, die jeweilige Anschlagkante durch eine Kerbe auszubilden, in die eine entsprechend umgeformte Kante der Lagerschale durch Bördeln, Verpressen oder Einklipsen gehalten wird. Dabei kann die Kerbe sowohl eckig wie auch als eine im Querschnitt runde oder unrunde Kehle ausgeführt sein.

Weitere vorteilhafte Ausbildungen sind in den Unteransprüchen gekennzeichnet.

Ausführungsbeispiele der Erfindung werden nachfolgend anhand der beigefügten Zeichnung beschrieben.

Es zeigen:
- Figur 1: den schematischen Aufbau einer erfindungsgemäßen Scheibenbremse in einem Querschnitt;
- Figur 2: einen Bremshebel der Scheibenbremse in einer perspektivischen Vorderansicht;
- Figur 3: ein Ausführungsbeispiel der Erfindung anhand eines als Einzelheit dargestellten Bremshebels in einer Seitenansicht;
- Figur 4: ein weiteres Ausführungsbeispiel des Bremshebels, gleichfalls in einer Seitenansicht;
- Figur 5: ein weiteres Ausführungsbeispiel der Erfindung in einem schematischen Ausschnitt eines Bremssattels;
- Figur 6: ein weiteres Ausführungsbeispiel der Erfindung gleichfalls anhand eines als Einzelheit dargestellten Bremshebels in einer Seitenansicht;
- Figur 7: den Bremshebel nach Figur 6 in einer perspektivischen Ansicht;
- Figur 8: den Bremshebel nach Figuren 6 und 7 in einer Explosionsdarstellung;
- Figur 9: ein weiteres Ausführungsbeispiel der Erfindung gleichfalls anhand eines als Einzelheit dargestellten Bremshebels in einer Seitenansicht.

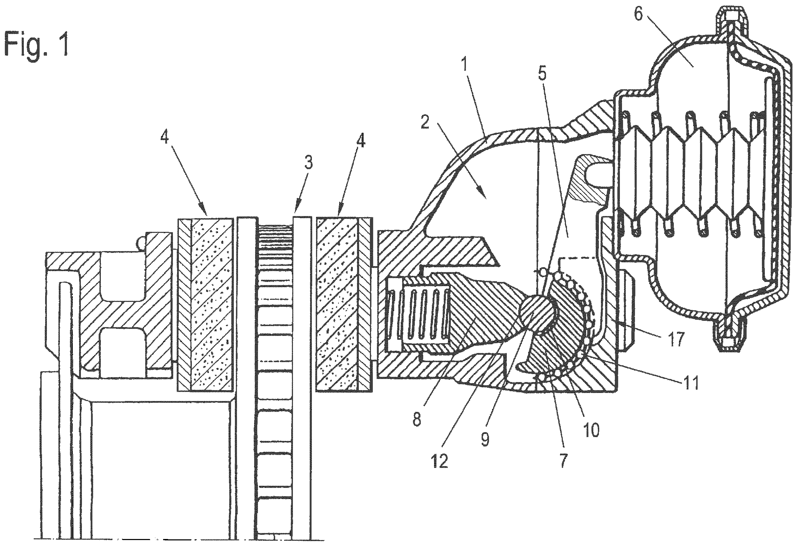

In der **Figur 1** ist in schematischer Darstellung eine Scheibenbremse für ein Nutzfahrzeug in einem Schnitt dargestellt, die eine Bremsscheibe 3 aufweist, die an einer nicht gezeigten Achse des Nutzfahrzeuges befestigt ist und von einem Bremssattel 1 umfasst ist, der in Richtung der Bremsscheibe 3 verschiebbar ist.

Im Bremssattel 1 ist eine Zuspanneinrichtung 2 angeordnet, mit der bei einer über einen vorzugsweise pneumatisch betätigten Bremszylinder 6 ausgelösten Bremsung Bremsbeläge 4 an die Bremsscheibe 3 drückbar sind.

Hierzu greift die Zuspanneinrichtung 2 an zwei nicht dargestellten, parallel und mit Abstand zueinander in einer Brücke 8 angeordneten, als Stellspindeln ausgebildeten Bremsstempeln an.

Die Zuspanneinrichtung 2 weist einen Bremshebel 5 auf, der mit dem Bremszylinder 6 in Wirkverbindung steht und bei dessen Betätigung in Richtung der Bremsscheibe 3 um eine Wälzrolle 9 verschwenkt wird, die parallel zur Ebene der Bremsscheibe 3 verläuft.

Weiter sind im Bremssattel 1 Wälzlager 11 vorgesehen, mit jeweils in einem Käfig gehaltenen Wälzkörpern, die sich an dem in diesem Bereich als Exzenter 7 ausgebildeten Bremshebel 5 einerseits und an der Innenseite einer Wand des Bremssattels 1 andererseits abstützen.

Die Wälzrolle 9, die als Drehlager für den Bremshebel 5 dient, liegt in einer Lagerschale 10 des Bremshebels 5 ein, die im Querschnitt ebenso der Querschnittskontur der Wälzrolle 9 angepasst ist wie eine konkave Rinne 12, in der die Wälzrolle 9 andererseits einliegt, wobei die Wälzrolle 9 gemeinsam mit der Lagerschale 10 ein Gleitlager bilden.

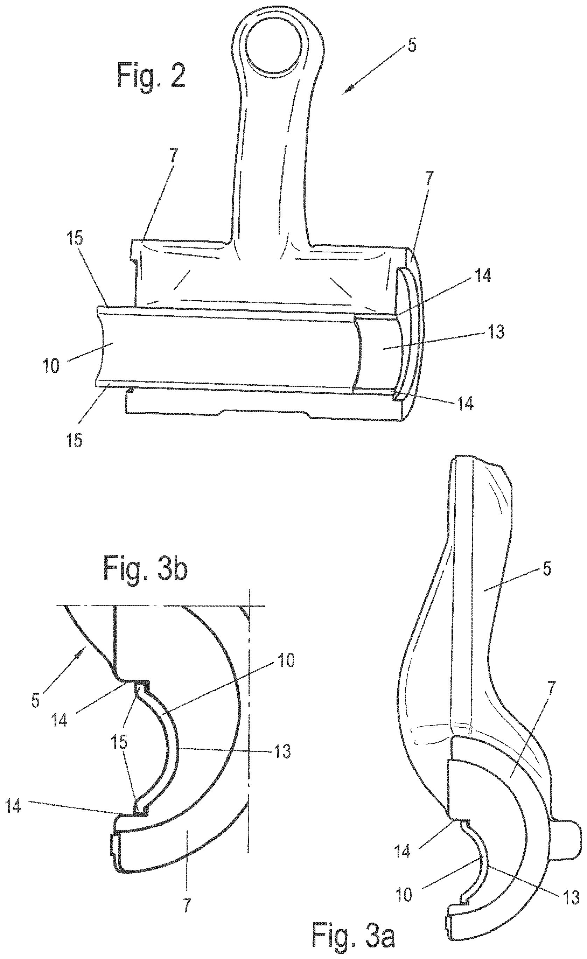

In der **Figur 2** ist der Bremshebel 5 als Einzelheit dargestellt. Darin ist zu erkennen, dass die Lagerschale 10 in einer rinnenförmigen, im Querschnitt kreisbogenförmig ausgebildeten Aufnahme 13 des Bremshebels 5 einliegt, wobei in der Abbildung die Lagerschale 10 noch nicht vollständig eingefügt ist.

Die beiden sich gegenüberliegenden, die Längskanten bildenden Randbereiche 14 der Aufnahme 13 sind als Anschlagkanten ausgebildet, die in diesem Beispiel jeweils in Form einer Ausklinkung 14 vorliegen, wie sie vergrößert in den Figuren 3a und 3b abgebildet sind.

In diesen Ausklinkungen 14 liegen abgewinkelte Schenkel 15 der Lagerschale 10 an, die die Längskanten der Lagerschale 10 bilden und die der Verschiebesicherung der Lagerschale 10 in Schwenkrichtung des Bremshebels 5 dienen.

Die beiden sich gegenüberliegenden Ausklinkungen 14, die in den **Figuren 3a****)** und b) deutlich erkennbar sind, wobei die Figur 3b) einen vergrößerten Ausschnitt des entsprechenden Bereiches der Figur 3a) wiedergibt, ist zu sehen, dass die sich gegenüberliegenden Ausklinkungen 14 zueinander parallele Flächen aufweisen, die für die Schenkel 15 jeweils einen Anschlag bilden.

Bei dieser Ausführungsvariante ist die Lagerschale 10 lediglich in die Aufnahme 13 einzusetzen. Ein Halt entgegen der Einfügerichtung in der Aufnahme 13 erfolgt durch die montierte Wälzrolle 9.

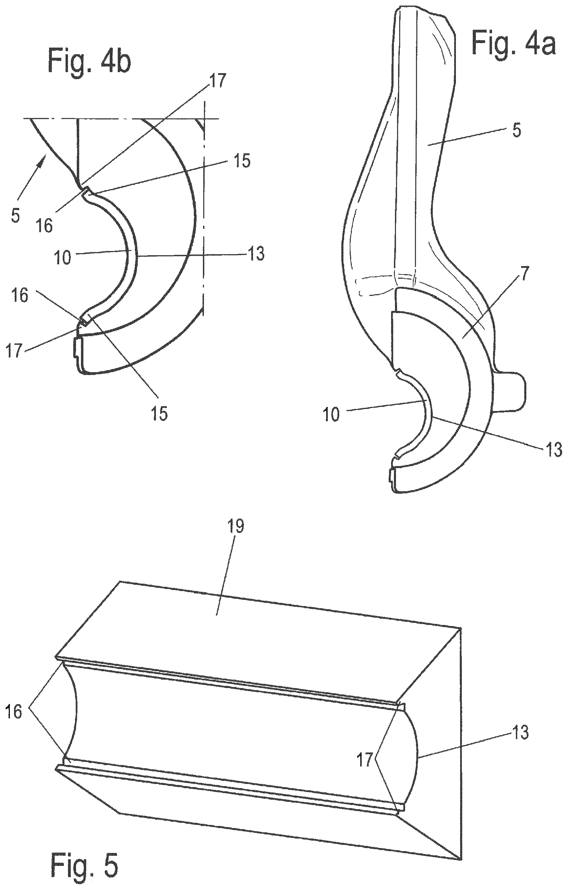

Bei dem in der **Figur 4** gezeigten Ausführungsbeispiel, die in der Figur 4b) einen vergrößerten Ausschnitt des Lagerbereichs nach der Figur 4a) wiedergibt, sind die sich gegenüberliegenden Anschlagkanten, die die rinnenförmige Aufnahme 13 längsseitig begrenzen, durch Kerben 16 gebildet, unter Ausbildung von Nasen 17, an denen die Lagerschale 10 anliegt und durch die die Lagerschale 10 in Querrichtung zur Längserstreckung arretiert ist.

Ein Einfügen der Lagerschale 10 in die Aufnahme 13 kann durch seitliches Einschieben erfolgen oder durch Einklipsen, wobei letzteres durch Eindrücken der Lagerschale 10 quer zur Längsachse, unter Verformung der Schenkel 15 erfolgt, die dann aufgrund der innewohnenden Rückstellkräfte in die Kerben 16 einfedern.

Denkbar ist jedoch auch, die Kerben 16 durch Bördeln oder Verpressen auszubilden.

In einem Ausführungsbeispiel sind Kerben 16 ausgebildet, die für die gegenüberliegenden Längskanten der Lagerschale 10 als Anschlagkante wirken. In einem alternativen Ausführungsbeispiel sind die Anschlagkanten für die Längskanten der Lagerschale 10 durch Nasen 17 oder zumindest einen Vorsprung ausgebildet. Dabei kann die Nase 17 oder der Vorsprung sich über die Länge der Aufnahme 13 erstrecken oder sich partiell beziehungsweise abschnittsweise über die Länge der Aufnahme 13 erstrecken. In einem besonderen Ausführungsbeispiel werden die Nasen 17 durch Kerben 16 gebildet. Dabei können die Kerben 16 im Bereich des Lagersitzes beziehungsweise der Aufnahme 13 oder in einem Randbereich außerhalb der Aufnahme 13 ausgebildet sein.

Während bei den in den Figuren 1-4 gezeigten Ausführungsbeispielen die Lagerschale 10 im Bremshebel 5 gehalten ist, ist in der **Figur 5** eine weitere Variante angedeutet, bei der die Aufnahme 13 an der Innenseite einer Wandung 19 des Bremssattels 1 vorgesehen ist, die hier nur schematisch angedeutet ist. Auch hierbei weist die rinnenförmige Aufnahme 13 an ihren einander gegenüberliegenden Längskanten, die Aufnahme 13 begrenzend, Anschlagkanten, hier in Form von Kerben 16 auf. Selbstverständlich sind auch hier andere Formen der Anschlagkanten denkbar, beispielsweis Ausklinkungen 14.

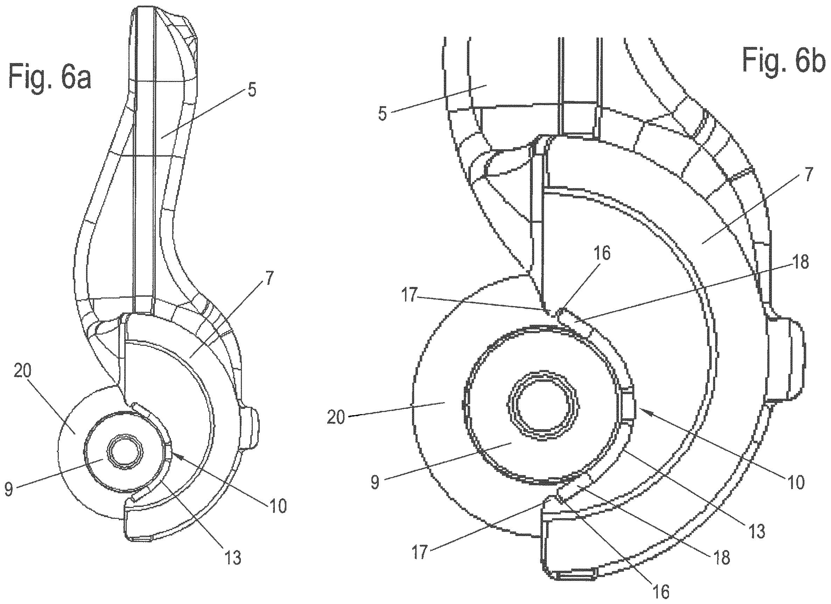

In der **Figur 6** ist eine weitere Ausführungsvariante der Erfindung abgebildet, wobei die Figur 6b) einen vergrößerten Ausschnitt des Lagerbereichs nach der Figur 6a) wiedergibt. Insbesondere in der Figur 6b), ist zu erkennen, dass den Kerben 16 zugewandte Endbereiche 18 der Aufnahme 13 und der Lagerschale 10 tangential als quasi verlängerte Schenkel verlaufen, die an den Nasen 17 anliegen. Hierzu ist der lichte Abstand der Nasen 17 zueinander kleiner als der äußere Abstand der zugeordneten Längskanten der Lagerschale 10 zueinander.

In einem nicht dargestellten Ausführungsbeispiel können die Nasen 17 auch durch Vorsprünge gebildet werden. Dabei sind die Aufnahme 13 und die Vorsprünge zweiteilig oder dreiteilig ausgebildet. Die rinnenförmige oder kreisbogenförmige Aufnahme 13, die bei dem in Fig. 6 dargestellten Ausführungsbeispiel an den Längskanten tangential ausläuft wird durch ein aus zumindest einem weiteren Bauteil, wie beispielsweise eine Platte oder ein Blech, bestehendem Anschlag begrenzt wird. Der hier als Anschlag bezeichnete Abschnitt der Platte oder des Blechs bildet den Vorsprung. Die Platte oder das Blech kann beispielsweise mittels taumeln mit dem Bremshebel 5 verbunden sein. Auch (fast beliebige) andere Verbindungsarten sind denkbar.

Bei dem Bremshebel 5 handelt es sich, zumindest in seiner Grundform, in einem Ausführungsbeispiel um ein Gussteil. In einer ersten Herstellungsvariante wird die im Guss vorbereitete Aufnahme 13 in einem ersten Schritt des Kalibrierens beziehungsweise Maßprägens bearbeitet. In einem zweiten Verfahrensschritt wird mit einem Formfräser die tangentiale Verlängerung Aufnahme 13 beziehungsweise zum Ausbilden der Nase 17 gefräst. In einem alternativen Herstellungsverfahren werden die beiden genannten Verfahrensschritte zusammengefasst und die rinnenförmige Aufnahme 13 mit den beiden Kerben 16 in einem Arbeitsschritt mit einem entsprechenden Formfräser mit den entsprechenden Toleranzen ausgebildet.

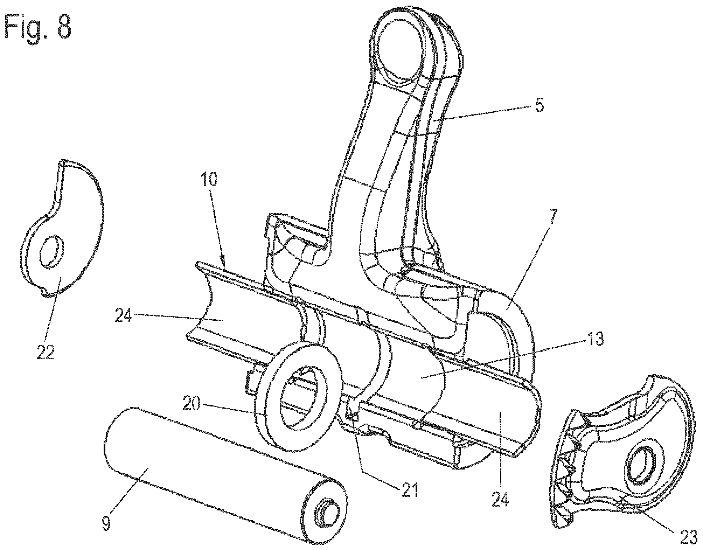

In einem sich daran anschließenden Verfahrensschritt werden die Lagerschale 10 oder zwei Abschnitte 24, wie diese in Fig. 8 dargestellt sind, in die Aufnahme 13 eingeschoben oder eingeklipst.

Zur exakten Formgebung der Aufnahme 13 kann diese in einem alternativen Herstellungsverfahren durch Stoßen oder Räumen ausgeformt werden.

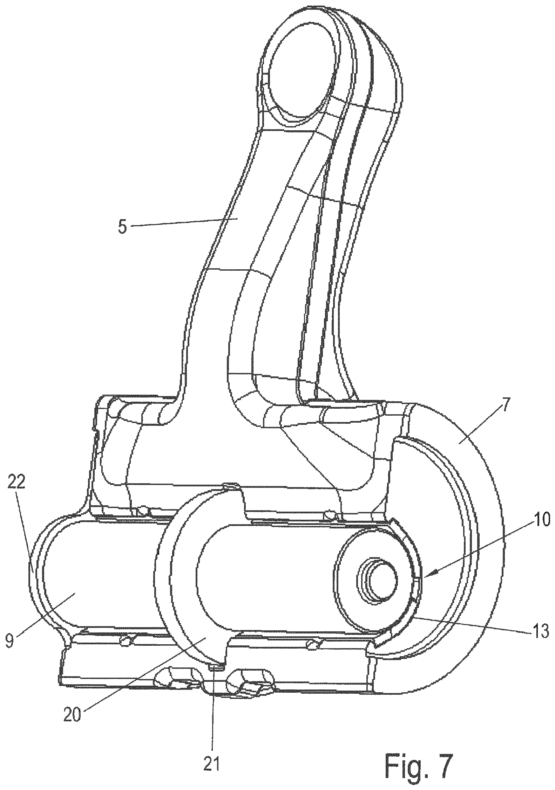

Wie die **Figuren 7** **und** **8** wiedergeben, besteht die Lagerschale 10 bei diesem Ausführungsbeispiel aus zwei schalenförmigen Abschnitten 24, die beidseitig eines im Bremshebel 5, d.h. in der Aufnahme 13 vorgesehenen, sich in Schwenkrichtung des Bremshebels 5 erstreckenden Schlitzes 21 positioniert sind. Dabei sind die beiden schalenförmigen Abschnitte 24 jeweils von einer Seite des Bremshebels 5 in die Aufnahme 13 eingeschoben und durch mit der Wälzrolle 9 verbundene Arretiermittel 22, 23 axial gesichert.

In den Schlitz 21 greift ein Sicherungsring 20 ein, der vorzugsweise mit Spiel auf der Wälzrolle 9 geführt ist, wobei die Krümmung des Schlitzes 21 dem Außenradius des Sicherungsringes 20 entspricht, der im Übrigen eine Verschiebebegrenzung für die Abschnitte 24 in Richtung des Schlitzes 21 bildet.

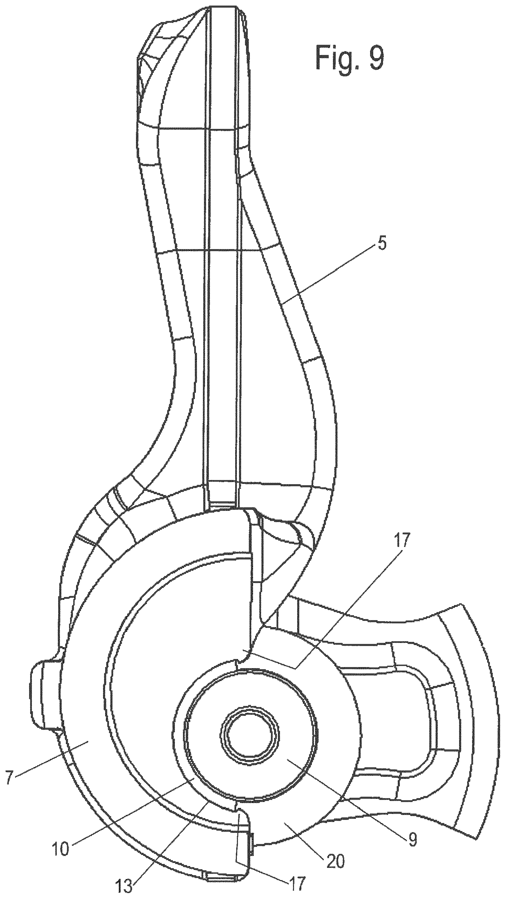

Die **Fig. 9** zeigt ein weiteres Ausführungsbeispiel der vorliegenden Erfindung in einer Seitenansicht. Im Vergleich zu dem anhand der vorangegangenen Figuren beschriebenen Ausführungsbeispiels ist das Lager ohne tangentialen Übergang ausgebildet. Die kreisbogenförmige Aufnahme 13 wird durch die Nasen 17 begrenzt, an denen die im Querschnitt ebenfalls kreisbogenförmige Lagerschale 10 kantenseitig anliegt.

### Bezugszeichen

- 1: Bremssattel
- 2: Zuspanneinrichtung
- 3: Bremsscheibe
- 4: Bremsbeläge
- 5: Bremshebel
- 6: Bremszylinder
- 7: Exzenter
- 8: Brücke
- 9: Wälzrolle
- 10: Lagerschale
- 11: Wälzlager
- 12: Rinne
- 13: Aufnahme
- 14: Ausklinkung
- 15: Schenkel
- 16: Kerbe
- 17: Nase
- 18: Endbereich
- 19: Wandung
- 20: Sicherungsring
- 21: Schlitz
- 22: Arretiermittel
- 23: Arretiermittel
- 24: Abschnitt

## Patentansprüche

1. Scheibenbremse für ein Nutzfahrzeug, mit einem eine fahrzeugseitige Bremsscheibe (3) übergreifenden Bremssattel (1), in dem eine Zuspanneinrichtung (2) angeordnet ist, die einen an eine mindestens einen Bremsstempel tragende Brücke (8) angreifenden, schwenkbaren Bremshebel (5) aufweist, der sich andererseits an der Innenseite einer Wand (17) des Bremssattels (1) direkt oder indirekt abstützt, wobei der Anlagebereich der Brücke (8) am Bremshebel (5) oder des Bremshebels (5) am Bremssattel (1) als Schwenklager ausgebildet ist, mit einer einen Teil eines Gleitlagers bildenden, im Querschnitt kreisbogenförmig gestalteten und in einer Aufnahme (13) einliegenden Lagerschale (10), **dadurch gekennzeichnet, dass** die Lagerschale (10) in Schwenkrichtung des Bremshebels (5) arretiert mit ihren einander gegenüberliegenden Längskanten an Anschlagkanten anliegt, die die rinnenförmige Aufnahme (13) längsseitig begrenzen.

2. Scheibenbremse nach Anspruch 1, **dadurch gekennzeichnet, dass** die Anschlagkanten als Ausklinkungen (14) ausgebildet sind.

3. Scheibenbremse nach Anspruch 2, **dadurch gekennzeichnet, dass** die sich gegenüberliegenden Ausklinkungen (14) zueinander parallele Anschlagflächen aufweisen.

4. Scheibenbremse nach einem der vorhergehenden Ansprüche, **dadurch gekennzeichnet, dass** die Anschlagkanten unter Ausbildung von Nasen (17) und/oder durch Kerben (16) gebildet sind.

5. Scheibenbremse nach Anspruch 4, **dadurch gekennzeichnet, dass** die Längskanten der Lagerschalen (10) als abgewinkelte Schenkel (15) ausgebildet sind, die in den Ausklinkungen (14) oder Kerben (16) einliegen.

6. Scheibenbremse nach einem der Ansprüche 4 oder 5, **dadurch gekennzeichnet, dass** die den Kerben (16) zugewandten Endbereiche (18) der Aufnahme (13) und der Lagerschale (10) tangential verlaufen.

7. Scheibenbremse nach einem der Ansprüche 4 bis 6, **dadurch gekennzeichnet, dass** der lichte Abstand der Nasen (17) zueinander kleiner ist als der äußere Abstand der zugeordneten Längskanten der Lagerschale (10) zueinander.

8. Scheibenbremse nach einem der Ansprüche 4 bis 7, **dadurch gekennzeichnet, dass** die Kerben (16) im Querschnitt eckig oder rund ausgebildet sind.

9. Scheibenbremse nach einem der Ansprüche 4 bis 8, **dadurch gekennzeichnet, dass** die Kerben (16) nach Einfügen der Lagerschale (10) durch Verpressen oder Bördeln gebildet sind.

10. Scheibenbremse nach einem der Ansprüche 4 bis 9, **dadurch gekennzeichnet, dass** die Lagerschale (10) in die Kerben (16) eingeklipst ist.

11. Scheibenbremse nach einem der vorhergehenden Ansprüche, **dadurch gekennzeichnet, dass** die Lagerschale (10) durch eine anliegende Wälzrolle (9) oder Gleitkante in der Aufnahme (13) gehalten ist.

12. Scheibenbremse nach einem der vorhergehenden Ansprüche, **dadurch gekennzeichnet, dass** die Lagerschale (10) aus zwei schalenförmigen Abschnitten (24) besteht.

13. Scheibenbremse nach einem der vorhergehenden Ansprüche, **dadurch gekennzeichnet, dass** auf der Wälzrolle (9) ein Sicherungsring (20) geführt ist, der in einen in der Rinne (13) des Bremshebels (5) vorgesehenen, sich in Schwenkrichtung des Bremshebels (5) erstreckenden Schlitz (21) eingreift.

14. Scheibenbremse nach Anspruch 13, **dadurch gekennzeichnet, dass** der Krümmungsradius des Schlitzes (21) dem Außenradius des Sicherungsringes (20) entspricht.

## Claims

1. Disc brake for a commercial vehicle, with a brake calliper (1) engaging over a brake disc (3) on the vehicle side, in which an application device (2) is arranged, which comprises a pivotable brake lever (5) which acts on a bridge (8) supporting at least one brake plunger, which brake lever (5) on the other hand is directly or indirectly supported on the inside of a wall (17) of the brake calliper (1), wherein the contact region of the bridge (8) on the brake lever (5) or of the brake lever (5) on the brake calliper (1) is formed as a pivot bearing, with a bearing shell (10) forming a part of a sliding bearing and which is configured as a circular arc in cross-section and lies in a seating (13), **characterised in that** the bearing shell (10), locked in the pivot direction of the brake lever (5), with its longitudinal edges located opposite one another lies against stop edges, which delimit the trough-like seating (13) longitudinally.

2. Disc brake according to claim 1, **characterised in that** the stop edges are designed as notches (14).

3. Disc brake according to claim 2, **characterised in that** the notches (14) located opposite one another have stop surfaces that are parallel to one another.

4. Disc brake according to any of the preceding claims, **characterised in that** the stop edges are designed to form lugs (17) and/or grooves (16).

5. Disc brake according to claim 4, **characterised in that** the longitudinal edges of the bearing shells (10) are formed as angled legs (15) which lie in the notches (14) or grooves (16).

6. Disc brake according to claim 4 or 5, **characterised in that** the end regions (18) of the seating (13) and of the bearing shell (10) facing the grooves (16) run tangentially.

7. Disc brake according to any of claims 4 to 6, **characterised in that** the clear distance of the lugs (17) from one another is smaller than the outer distance of the associated longitudinal edges of the bearing shell (10) from one another.

8. Disc brake according to any of claims 4 to 7, **characterised in that** the grooves (16) are of angular or round design in cross-section.

9. Disc brake according to any of claims 4 to 8, **characterised in that** the grooves (16), following the inserting of the bearing shell (10), are formed by crimping or flanging.

10. Disc brake according to any of claims 4 to 9, **characterised in that** the bearing shell (10) is clipped into the grooves (16).

11. Disc brake according to any of the preceding claims, **characterised in that** the bearing shell (10) is held in the seating (13) by an abutting roller (9) or sliding edge.

12. Disc brake according to any of the preceding claims, **characterised in that** the bearing shell (10) consists of two shell-like portions (24).

13. Disc brake according to any of the preceding claims, **characterised in that** on the roller (9) a locking ring (20) is guided, which engages with a slot (21) provided in the trough (13) of the brake lever (5) and extending in the pivot direction of the brake lever (5).

14. Disc brake according to claim 13, **characterised in that** the curvature radius of the slot (21) corresponds to the outer radius of the locking ring (20).

## Revendications

1. Frein à disque d'un véhicule utilitaire, comprenant un étrier (1) de frein chevauchant un disque (3) de frein du côté du véhicule, dans lequel est disposé un dispositif de serrage qui a un levier de frein pivotant qui attaque au moins un pontet (8) portant un piston de frein et qui s'appuie directement ou indirectement, d'autre part, sur la face intérieure d'une paroi (17) de l'étrier (1) de frein, la région de l'application du pontet (8) au levier (5) de frein ou du levier (5) de frein à l'étrier (1) de frein étant constituée en palier pivotant, comprenant une coquille (10) de coussinet formant une partie d'un palier lisse conformée en forme d'arc de cercle en section transversale et pénétrant dans un logement (13), **caractérisé en ce que** la coquille (10) de coussinet bloquée dans le sens de pivotement du levier (5) de frein s'applique, par ses bords longitudinaux opposés l'un à l'autre, à des bords de butée qui délimitent du côté longitudinal le logement (13) en forme de rainure.

2. Frein à disque suivant la revendication 1, **caractérisé en ce que** les bords de butée sont constitués sous la forme d'encoches (14).

3. Frein à disque suivant la revendication 2, **caractérisé en ce que** les encoches (14) opposées ont des surfaces de butée parallèles entre elles.

4. Frein à disque suivant l'une des revendications précédentes, **caractérisé en ce que** les bords de butée sont formés en constituant des becs (17) et/ou des rainures (16) .

5. Frein à disque suivant la revendication 4, **caractérisé en ce que** les bords longitudinaux de la coquille (10) de coussinet sont constitués sous la forme de branches (15) coudées qui pénètrent dans les encoches (14) ou les rainures (16).

6. Frein à disque suivant l'une des revendications 4 ou 5, **caractérisé en ce que** les parties (18) d'extrémité, tournées vers les rainures (16), du logement (13) et de la coquille (10) de coussinet s'étendent tangentiellement.

7. Frein à disque suivant l'une des revendications 4 à 6, **caractérisé en ce que** la distance entre les becs (17) est plus petite que la distance extérieure entre les bords longitudinaux associés de la coquille (10) de coussinet.

8. Frein à disque suivant l'une des revendications 4 à 7, **caractérisé en ce que** les rainures (16) ont une section droite polygonale ou circulaire.

9. Frein à disque suivant l'une des revendications 4 à 8, **caractérisé en ce que** les rainures (16) sont formées, après insertion de la coquille (10) de coussinet, par pressage ou moulage.

10. Frein à disque suivant l'une des revendications 4 à 9, **caractérisé en ce que** la coquille (10) de coussinet est clipsée dans les rainures (16).

11. Frein à disque suivant l'une des revendications précédentes, **caractérisé en ce que** la coquille (10) de coussinet est maintenue dans le logement (13) par application d'un rouleau (9) ou par des bords de glissement.

12. Frein à disque suivant l'une des revendications précédentes, **caractérisé en ce que** la coquille (10) de coussinet est constituée de deux parties (24) en forme de coque.

13. Frein à disque suivant l'une des revendications précédentes, **caractérisé en ce que** sur le rouleau (9) est guidée une bague (20) de sûreté qui pénètre dans une fente (21) prévue dans la rainure (13) du levier (5) de frein et s'étendant dans le sens de pivotement du levier (5) de frein.

14. Frein à disque suivant la revendication 13,
**caractérisé en ce que** le rayon de courbure de la fente (21) correspond au rayon extérieur de la bague (20) de sûreté.
